Europäisches Patentamt

European Patent Office

Office européen des brevets

(19)

(11) Publication number: **0 004 844**
**B1**

(12) **EUROPEAN PATENT SPECIFICATION**

(45) Date of publication of patent specification: **30.11.83**

(51) Int. Cl.³: **B 29 C 1/02, B 29 F 1/022**

(21) Application number: **78101546.6**

(22) Date of filing: **04.12.78**

(54) Apparatus for manufacturing plastic products.

(30) Priority: **19.04.78 JP 46048/78**

(43) Date of publication of application:
**31.10.79 Bulletin 79/22**

(45) Publication of the grant of the patent:
**30.11.83 Bulletin 83/48**

(84) Designated Contracting States:
**DE FR GB IT NL SE**

(56) References cited:
**DE - A - 2 543 554**
**DE - C - 743 598**
**FR - A - 1 147 812**
**GB - A - 233 240**
**GB - A - 539 239**
**US - A - 1 631 249**
**US - A - 1 639 416**
**US - A - 1 970 261**
**US - A - 2 397 168**
**US - A - 2 822 592**

**The Standard Handbook of Textiles; A.J.**
**HALL/Newnes Butterworth 8th Ed. P.281.**

(73) Proprietor: **KOGURE, YAMATO**
**No. 663 5821, Masago-cho Niigata-shi**
**Niigata (JP)**

(72) Inventor: **KOGURE, YAMATO**
**No. 663 5821, Masago-cho Niigata-shi**
**Niigata (JP)**

(74) Representative: **Goddar, Heinz J., Dr. et al,**
**FORRESTER & BOEHMERT Widenmayerstrasse**
**4/I**
**D-8000 München 22 (DE)**

Courier Press, Leamington Spa, England.

Apparatus for manufacturing plastic products

This invention relates to an apparatus for manufacturing a plastic product, such as industrial prototype models and false teeth.

Generally a plastic product to be prepared individually, such as false teeth, could be prepared by an apparatus disclosed in FR—A—1 147 812.

From the DE—C—743 598 a process for producing artificial teeth is known, in which a mould comprising an upper and lower portion is pressed together in a pressing machine while injecting plastic material in a previously produced plaster form.

The known processes or apparatus for providing plastic products do have the disadvantage, that they do not have completely satisfactory performance, because cooling down of the models takes a long time and also leads to unsatisfactory products. Furthermore, there has to be waited for a long time until a hardened and non-deformable product can be taken from the mold.

Therefore simple and precise substitutes for such a prior art molding apparatus, which lead to a faster molding process have been wanted for a long time.

Accordingly it is primary object of this invention to provide an apparatus which allows the manufacturer of plastic products to work more economic and still very precise.

It is another object of this invention to provide a mold, which can be used when manufacturing plastic products from wax models, which allow any modification on the shape very easily.

It is still another object of this invention to provide an apparatus having a temperature controlling equipment which substantially saves the time to be involved in the manufacturing process.

The apparatus of this invention may be used for a variety of purposes including the production of industrial prototype models, artificial teeth, table wares, trays and the like.

Brief Description of the Drawings

Figure 1 shows a perspective view of a plastic product to be manufactured in the apparatus according to this invention;

Figure 2 shows a perspective view of a flask of an embodiment of the apparatus of this invention;

Figure 3 shows a cross-sectional view of a lower portion of the flask with a wax model mounted therein; and

Figures 4—7 show a vertical cross-sectional view of the apparatus for illustrating the use of the mold.

Detailed Description of the Invention

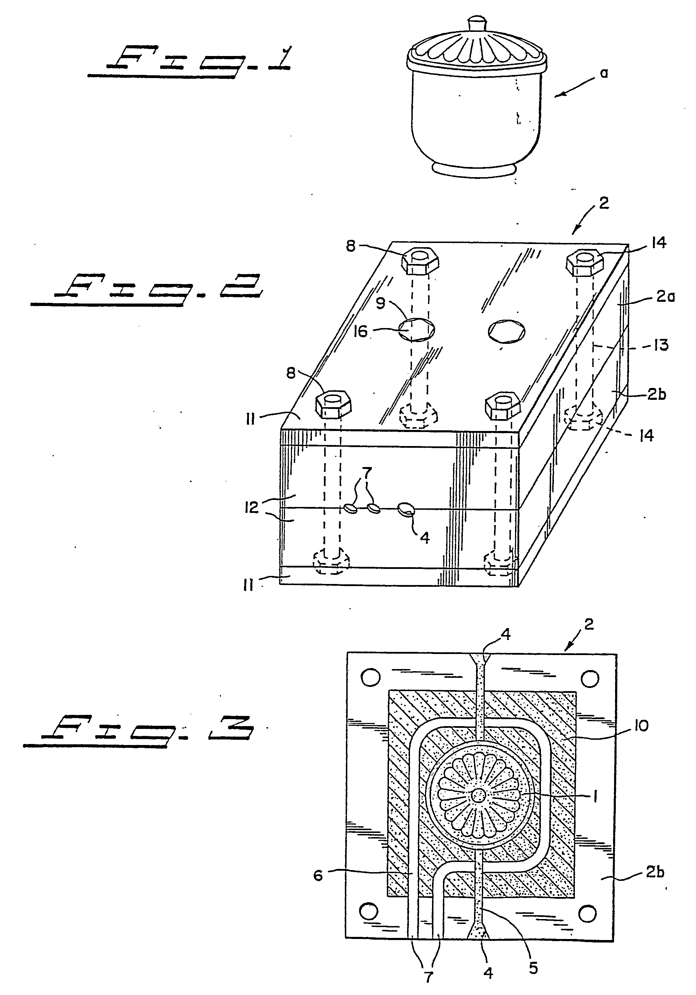

The basis structure of a preferred embodiment of an apparatus according to the invention is shown in Figures 1—3, in which a wax model 1 is prepared having identical size and shape to a plastic product to be manufactured and is placed in a flask 2 comprising upper and lower portions 2a and 2b. The flask 2 may be disassembled into top and bottom lids 11 and side frames 12. These parts are to be fastened together into an integral unit by means of fasteners 8, typically, bolts 13 and nuts 14. Plastic injection ports 4 are formed in the side frames 12, thereby also allowing melted wax to flow out through the ports 4.

There is no restriction upon the number of ports 4 formed in the mold. However, in cases where there are two or more ports 4, all ports 4 except the one used for injection of the plastic material have to be tightly sealed by means of plugs 15 during injection of the plastic material. Openings 9 for injecting plaster are formed in the top of the upper flask portion 2a. Plugs 16 are removably installed in these openings 9. The wax model 1 is fixed in place on the inside bottom surface of the lower flask portion 2b. Plastic injection gates 5 are formed with wax extending from the wax model 1 to the plastic injection ports 4. A cooling pipe 6 is accommodated inside the lower flask portion 2b so that both ends of said pipe 6 extend from apertures 7 provided in the upper and lower portions 2a and 2b, the upper and lower portions 2a and 2b being separable from each other along a line running through the centres of the apertures 4 and 7.

The upper flask portion 2a is set on top of the lower flask portion 2b, and the two portions 2a and 2b are fastened together by means of fasteners 8 as shown in Figure 2.

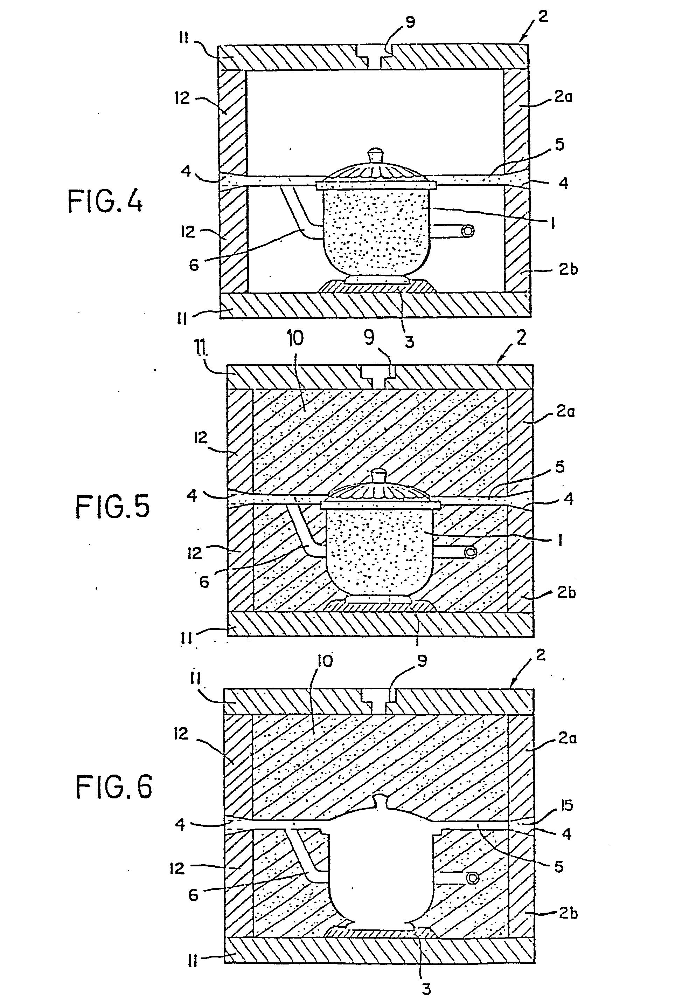

The wax model 1 is to be fixed in place by having its lower end embedded in superhard plaster bed 3 on the inside bottom surface of the lower portion 2b (see Figure 4). The wax model 1 can also be made of a mixture of wax and soft plastic.

The flask 2 is formed by setting the upper portion 2a on top of the lower portion 2b and fastening the two portions together by means of fasteners 8 as shown in Figure 2 in such a manner that the flask 2 is pressure resistant.

Now specifically referring to Figure 3 showing the wax model 1 mounted in the lower portion flask 2b, plastic injection gates 5 are formed with wax, said gates 5 extending from the wax model 1 to plastic injection ports 4 provided in the side frames 12 of the flask 2. A cooling pipe 6, both ends of which are open to the air through apertures 7 at the upper edge of the frame 12 of the lower portion flask 2b, is equipped inside the flask 2 (also see Figure 4). The cooling pipe 6 is so made as to be pressure and heat resistant. It is of course possible to have two or more cooling pipes in the flask 2.

Referring to Figures 4 to 7, in which the use of the model is visually shown:—

First, the wax model 1 is placed in the flask 2 and the flask 2 is fastened tightly as mentioned above. Plaster is poured into the flask 2 through openings 9 to fill up the inside of the flask 2 whereby the wax model 1, cooling pipe 6 and gates 5 are embedded in the plaster 10 as shown in Figure 5.

When the plaster 10 has hardened, the flask 2 is heated so that the wax inside thereof is melted. This stage is shown in Figure 6. Then the melted wax is allowed to flow out through the ports 4 and is washed out of the flask 2 with hot water.

The flask 2 may be heated by circulating hot water or heated steam through the cooling pipe 6. The flask 2 is then cooled by circulating cold water through the cooling pipe 6.

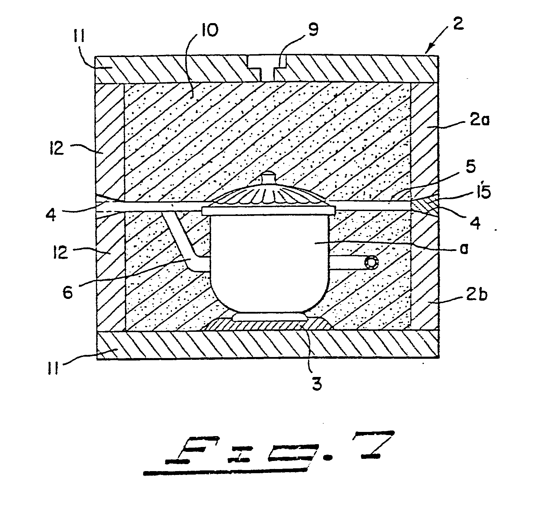

Referring to Figure 7, one of the two plastic injection ports is tightly sealed and the flask 2 is turned on its side such that the open port 4 is at the top. Then softened plastic material such as acrylic resin, polycarbonate, polyamide, resin, styrene resin, polycerethane resin and poly-acetol resin is injected through such open port 4 with an injector. In this step, it is advisable to apply some plastic releasing agent into the flask before the softened plastic material is injected thereby expediting the process of taking the plastic product 1 out of the plaster 10.

When the plastic material has become solid, to form the plastic product a, the flask 2 is disassembled and the product 1 is obtained by removing the plaster 10. Such product may be polished by a known method.

The apparatus has the advantage that all the parts of the flask can be readily removed and the cooling pipe freed easily from the plaster.

## Claim

Apparatus for manufacturing a plastic product, comprising a flask (2) having a lid (11) and a bottom (11) and upper and lower portions (2a, 2b) therebetween, all separable from each other and means for fastening them together so as to jointly define a cavity in which a wax model (1) can be placed; and that at least one opening (4) for injecting plastic material and at least one opening (9) for pouring plaster are provided in said flask (2) characterized in that at least one cooling pipe (6) is provided extending from apertures (7) in the upper and lower portions (2a, 2b) into the interior of the flask and that the upper and lower portions (2a, 2b) can be separated from each other along a line running through the centres of said apertures (7).

## Patentanspruch

Vorrichtung zur Herstellung von Kunststoffgegenständen, die eine Gußform (2) mit einem Deckel (11), einem Bodenteil (11) und unteren und oberen Abschnitten (2a, 2b) dazwischen, die alle voneinander trennbar sind, sowie Mittel, sie zusammenzuhalten, damit sie gemeinsam einen Hohlraum bilden, in den ein Wachs-modell (1) gelegt werden kann, aufweist; wobei mindestens eine Öffnung (4) zum Einspritzen von Kunststoffmaterial und mindestens eine Öffnung (9) zum Eingießen von Gips in die Gußform (2) vorgesehen sind, dadurch gekennzeichnet, daß mindestens ein Kühlrohr (6) vorgesehen ist, daß sich von den Öffnungen (7) in den oberen und unteren Abschnitten (2a, 2b) in das Innere der Gußform erstreckt und das die oberen und unteren Abschnitte (2a, 2b) voneinander, längs einer Linie, die durch die Zentren der Öffnungen verläuft, trennbar sind.

## Revendication

Appareil pour la fabrication d'un produit en matière plastique, comprenant un chassis de moulage (2) muni d'un couvercle (11) et d'un fond (11) et de parties supérieure et inférieure (2a, 2b) entre les deux, toutes séparables les unes des autres et des moyens pour les fixer ensemble de façon à définir après jonction une cavité dans laquelle peut être placé un modèle en cire (1) et au moins une ouverture (4) pour injecter de la matière plastique et au moins une ouverture (9) pour verser platre étant prévues dans le dit chassis de moulage (2), caractérisé par le fait qu'il est prévu au moins un conduit de refroidissement (6) s'étendant à partir d'orifices (7) dans les parties supérieure et inférieure (2a, 2b) à l'intérieur du chassis du moulage, et les parties supérieure et inférieure (2a, 2b) peuvent être séparées l'une de l'autre de long d'une ligne passant par les centres de ces orifices (7).

Fig. 1

Fig. 2

Fig. 3

FIG.4

FIG.5

FIG.6

Fig. 7